# FASCICULE DE BREVET EUROPEEN

(11) **EP 1 015 280 B1**
(45) Date de publication et mention de la délivrance du brevet: **15.01.2003**
(21) Numéro de dépôt: 98944007.8
(22) Date de dépôt: 16.09.1998
(51) Int. Cl.: B60R 21/20

(54) **ELEMENT D'EQUIPEMENT INTERIEUR POUR VEHICULE, NOTAMMENT VEHICULE AUTOMOBILE**
FAHRZEUGINNENAUSSTATTUNG, INSBESONDERE FÜR EIN KRAFTFAHRZEUG
INTERIOR EQUIPMENT ELEMENT FOR VEHICLE, IN PARTICULAR MOTOR VEHICLE

(30) Priorité: 19.09.1997 FR 9711901
(43) Date de publication de la demande: 05.07.2000
(73) Titulaire: Visteon Systemes Interieurs, 92927 La Defense Cedex (FR)
(72) Inventeur: BEY, Christian, F-59147 Gondecourt (FR); PIEPER, Horst, F-59147 Gondecourt (FR)
(74) Mandataire: Duthoit, Michel
(86) Numéro de dépôt international: FR9801988
(87) Numéro de publication internationale: WO99015369

(56) Documents cités:
- EP-A- 0 358 230
- EP-A- 0 428 935
- WO-A-96/30232
- WO-A-99/01317
- DE-C- 4 419 738
- US-A- 5 375 876
- US-A- 5 429 385
- US-A- 5 445 410

## Description

La présente invention concerne un élément d'équipement intérieur pour véhicule, notamment véhicule automobile.

Toutefois, bien que plus particulièrement prévue pour de telles applications, elle pourra également être utilisée dans tout autre type de véhicule maritime, aérien et/ou terrestre.

Afin de renforcer la sécurité du conducteur et/ou des passagers d'un véhicule, il est connu d'utiliser des dispositifs expansibles, tels que, notamment des dispositifs de retenue à sac ou coussin gonflable. Ceux-ci sont disposés, par exemple, sous les tableaux de bord qui présentent alors une trappe apte à s'escamoter au moment du déclenchement du dispositif de retenue pour le laisser se déployer dans l'habitacle à travers l'orifice créé par l'ouverture de la trappe.

Lesdites trappes présentent généralement un contour ouvert, en U ou en H, permettant leur articulation autour d'une charnière définie par ou au niveau du panneau constituant ledit tableau de bord.

Toutefois, selon ce mode de réalisation, la trappe ne se détache pas totalement du panneau lors du déclenchement du dispositif de retenue et limite ainsi son déploiement.

Afin de remédier à cet inconvénient, on connaît également des dispositifs de retenue à sac ou coussin gonflable, obturés par des trappes de contour fermé, notamment en O. Celles-ci peuvent donc être expulsées totalement et facilitent la sortie du dispositif de retenue.

Toutefois, afin d'éviter que lesdites trappes ne deviennent un projectile capable de blesser un occupant du véhicule, il est nécessaire de les retenir avec une sangle de liaison telle que décrite dans le document DE-C-4419748 qui a trait à un tableau de bord muni d'un couvercle d'airbag rapporté fixé à l'aide de lanières. La difficulté qui se pose alors est le risque de rupture de ladite sangle lors du déclenchement du dispositif de retenue.

Le document WO 96/30232 A montre un élément d'équipement conforme au préambule de la revendication 1.

On connait également le document WO 99/01317 à considérer comme état de la technique dans le sens de l'Article 54(3) CBE, qui a trait à un couvercle d'airbag à plusieurs couches et comportant notamment une plaque de métal permettant de renforcer le couvercle. Toutefois le dispositif ne décrit pas un panneau monocouche et présente de par sa structure des différences au niveau de la résistance à la rupture pouvant entraîner une fragmentation du panneau lors du déclenchement de l'airbag.

Par ailleurs, afin de diminuer les coûts de revenu des tableaux de bord, on souhaite pouvoir utiliser des panneaux constitués d'une seule couche de matière, de préférence bas de gamme. Vis-à-vis de l'implantation d'un dispositif de retenue à sac ou coussin gonflable sous ledit panneau, le risque qui se pose alors est que la trappe permettant le déploiement dudit dispositif de retenue se fragmente lors de son ouverture.

Une autre difficulté à signaler avec les tableaux monocouches est la réalisation de trappes qui ne soient pas visibles pour les occupants du véhicule, ceci afin d'améliorer l'aspect extérieur desdits tableaux de bord.

Le but de l'invention est de proposer un élément d'équipement intérieur pour véhicule, notamment véhicule automobile, constitué d'un panneau comprenant une trappe d'un dispositif expansible, qui pallie les inconvénients précités et permette de faciliter le déploiement dudit dispositif à travers ladite trappe.

Un autre but de la présente invention est de proposer un élément d'équipement intérieur pour véhicule, notamment véhicule automobile, constitué d'un panneau comprenant une trappe d'un dispositif expansible, qui permette de retenir ladite trappe lors du déclenchement dudit dispositif.

Un autre but de la présente invention est de proposer un élément d'équipement intérieur pour véhicule, notamment véhicule automobile, constitué d'un panneau comprenant une trappe d'un dispositif expansible, qui permette d'éviter la fragmentation de ladite trappe lors du déclenchement dudit dispositif.

Un autre but de la présente invention est de proposer un élément d'équipement intérieur pour véhicule, notamment véhicule automobile, constitué d'un panneau comprenant une trappe d'un dispositif expansible, dans lequel ladite trappe ne soit pas visible sur la surface dudit panneau pour les occupants du véhicule.

Un autre but de la présente invention est de proposer un élément d'équipement intérieur pour véhicule, notamment véhicule automobile, constitué d'un panneau comprenant une trappe d'un dispositif expansible, dont le coût de revient reste limité.

D'autres buts et avantages de la présente invention apparaîtront au cours de la description qui va suivre qui n'est donnée qu'à titre indicatif et qui n'a pas pour but de la limiter.

La présente invention concerne un élément d'équipement intérieur pour véhicule, notamment véhicule automobile, constitué
- d'un panneau comprenant une trappe d'un dispositif expansible, notamment de retenue à sac ou coussin gonflable, présentant une direction d'expansion donnée, ladite trappe, prévue dans la masse dudit panneau, étant délimitée par un contour fermé, apte à permettre une ouverture totale de ladite trappe lors du déclenchement dudit dispositif expansible,
- d'au moins une nervure d'appui, assujettie en un point fixe dudit véhicule, orientée sensiblement selon ladite direction d'expansion et s'étendant sur la longueur de ladite trappe,
- d'au moins un élément de liaison, assujetti d'une part à ladite trappe, sur la longueur de laquelle il s'étend, sensiblement, et, d'autre part à ladite nervure de manière à retenir ladite trappe lors de son ouverture, ladite trappe et ledit élément de liaison étant constitués de pièces distinctes,
où :
- ladite nervure d'appui présente un bord, rigide ou rigidifié, prévu au voisinage d'une arête, dite supérieure, de ladite trappe, ledit bord étant prévu à distance dudit panneau
- ledit panneau est prévu monocouche.

L'invention sera mieux comprise à la lecture de la description suivante accompagnée des dessins en annexe qui en font partie intégrante et parmi lesquels :
- la figure 1 est une vue latérale en coupe illustrant un premier exemple de réalisation de l'élément d'équipement intérieur pour véhicule conforme à l'invention, au niveau d'un tableau de bord,
- la figure 2 est une vue latérale en coupe illustrant un second exemple de réalisation de l'élément d'équipement intérieur pour véhicule représenté à la figure 1 précédente,
- la figure 3 est une vue latérale en coupe illustrant l'élément d'équipement intérieur pour véhicule représenté à la figure 2 précédente, dans deux états différents,
- la figure 4 est une vue de dessus d'après les figures 1 ou 2,
- la figure 5 est une vue latérale en coupe illustrant un troisième exemple de réalisation de l'élément d'équipement conforme à l'invention,
- la figure 6 est une vue latérale en coupe illustrant un quatrième exemple de réalisation de l'élément d'équipement conforme à l'invention.

La présente invention concerne un élément d'équipement intérieur pour véhicule, notamment véhicule automobile.

Toutefois, bien que plus particulièrement prévue pour de telles applications, elle pourra également être utilisée dans tout autre type de véhicule maritime, aérien et/ou terrestre.

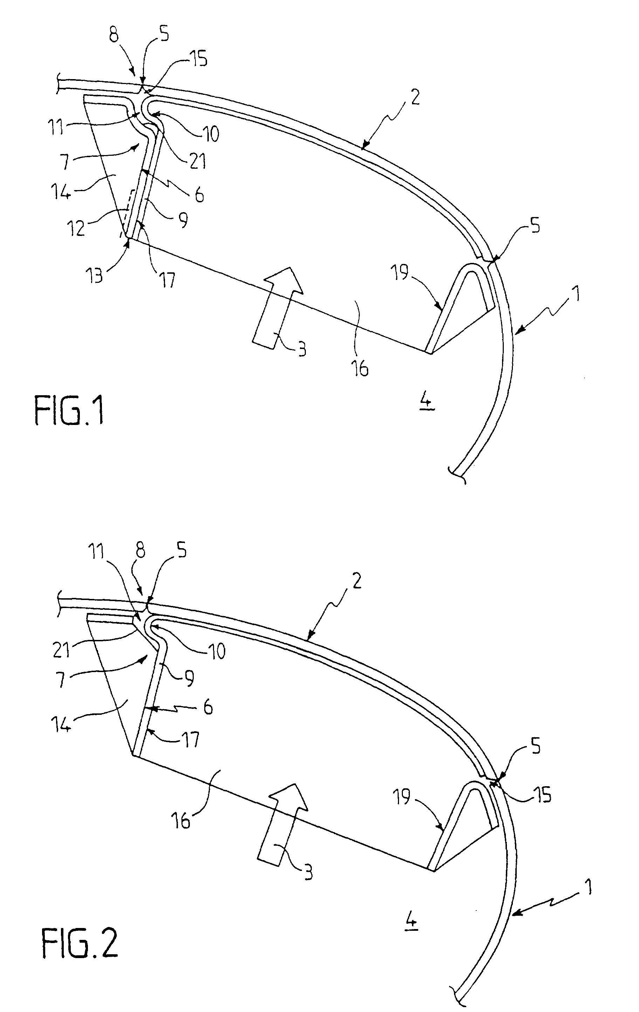

Comme représenté aux figures 1 à 6, l'élément d'équipement intérieur pour véhicule conforme à l'invention est constitué d'un panneau 1 comprenant une trappe 2 d'un dispositif expansible, notamment de retenue à sac ou coussin gonflable.

Ce dernier, non représenté en lui-même, présente une direction d'expansion donnée, repérée 3. Il est situé, par exemple, derrière ledit panneau 1, c'est-à-dire dans le volume 4 caché aux occupants du véhicule. Lors de son déclenchement, ledit dispositif expansible est alors orienté, vers ladite trappe 2, sensiblement selon ladite direction d'expansion 3, avant de se déployer pour prendre sa forme finale une fois ladite trappe 2 ouverte.

Selon l'invention, ladite trappe 2, notamment définie dans la masse dudit panneau 1, est délimitée par un contour fermé 5, apte à permettre une ouverture totale de ladite trappe 2 lors du déclenchement dudit dispositif expansible. Ladite trappe 2 se détache donc intégralement dudit panneau 1, facilitant ainsi le déploiement dudit dispositif.

L'élément d'équipement conforme à l'invention est également constitué au moins d'une nervure d'appui 6, assujettie en un point fixe, non représenté, dudit véhicule. Ladite nervure 6 est orientée sensiblement selon ladite direction d'expansion 3 et l'un 7 de ses bords est prévu au niveau d'une arête 8, dite supérieure, de ladite trappe 2.

De manière à retenir cette dernière lors de son ouverture, un élément de liaison 9, assujetti, d'une part à ladite trappe 2 et d'autre part à ladite nervure 6 est prévu. Ledit élément de liaison 9 constitue en quelque sorte, une charnière dont l'axe de rotation ne serait pas matériellement défini.

Par sa fixation sur ladite nervure 6, prévue sensiblement orthogonale ou inclinée par rapport au panneau 1, l'élément de liaison 9 n'est ainsi que pas ou peu soumis à des efforts de cisaillement lors de l'ouverture de la trappe et celui-ci ne doit plus résister qu'à des contraintes de traction. Les risques de rupture sont donc diminués et la trappe 2 ne constitue plus un projectile potentiel.

Pour favoriser ce résultat, ledit contour 5 n'est pas en contact avec ledit élément de liaison 9, ce dernier étant assujetti au panneau 1, ni à l'extérieur dudit contour 5, ni sur ledit contour 5 mais juste à l'intérieur de celui-ci, c'est-à-dire au niveau de ladite trappe 2.

A ce sujet, celle-ci constitue, éventuellement, le couvercle dudit dispositif expansible. Par ailleurs, comme représentée, elle pourra être constituée en une seule partie ou, selon d'autres modes de réalisation, de plusieurs parties, reliées chacune audit panneau 1 par undit élément de liaison 9 assujetti à unedite nervure 6 correspondante.

La ou lesdites nervures 6 orientées sensiblement selon ladite direction d'expansion 3 sont prévues derrière ledit panneau 1, ledit point fixe étant constitué, par exemple, soit par ledit panneau 1, à l'extérieur dudit contour 5, et/ou tout autre élément d'équipement intérieur du véhicule, prévu à proximité, ou encore un élément de sa carrosserie tel que, notamment, le tablier séparant l'habitacle du compartiment moteur dans le cas d'un panneau 1 constituant comme développé plus loin un tableau de bord.

La largeur de ladite nervure d'appui 6 correspond à celle de ladite arête supérieure 8.

Afin de diminuer encore les risques de rupture dudit élément de liaison 9 en favorisant la possibilité d'élongation de ce dernier, celui-ci pourra présenter un supplément de longueur 10, déformable librement dans un logement 11 prévu entre ladite nervure 6 et ledit panneau 1.

Ceci permet en outre, notamment, de faciliter l'ouverture de ladite trappe 2 sans frottement avec le reste du panneau 1, notamment au niveau de l'arête supérieure 8.

Ledit supplément de longueur 10 définit, par exemple, un soufflet, continu dans la direction de ladite arête 8. A ce sujet, ledit élément de liaison 9 est constitué, notamment, d'une bande de matière, sensiblement de même épaisseur sur toute sa surface.

Selon un premier mode de mise en oeuvre, correspondant notamment à l'exemple de réalisation illustré à la figure 1, ladite nervure 6 et ledit élément de liaison 9 sont constitués par deux pièces différentes. Ledit élément de liaison 9 est alors assujetti sur ladite nervure 6, par exemple, grâce à un retour 12 prévu autour du bord 13 opposé à celui 7 se trouvant au voisinage de ladite arête supérieure 8. Il est à noter que ledit élément 9 peut être fixé sur l'une ou l'autre des faces de la nervure 6.

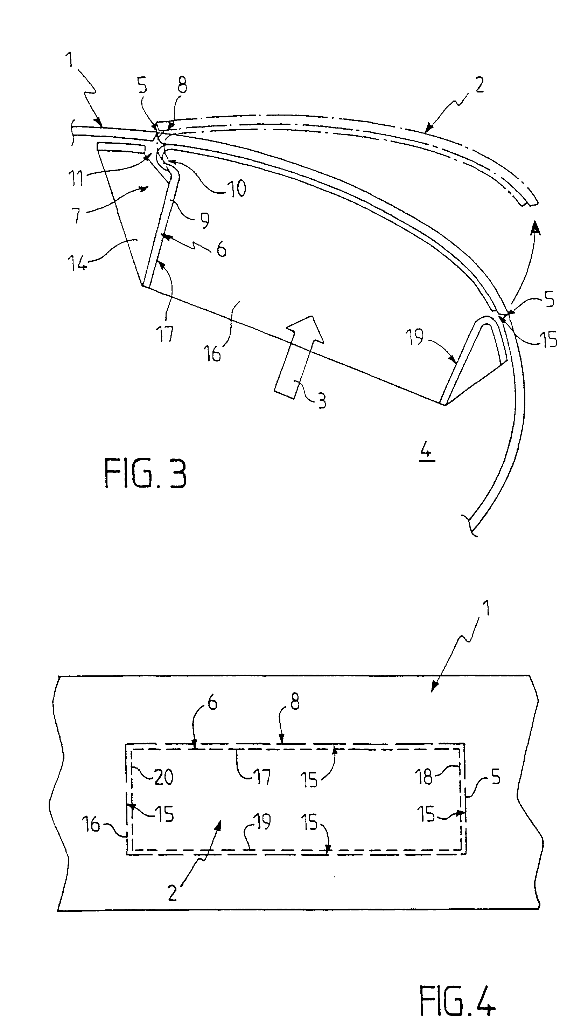

Selon un autre mode de réalisation, correspondant notamment à celui illustré aux figures 2 et 3, ladite nervure 6 est constituée par ledit élément de liaison 9 lui-même, prévu rigidifié, au moins partiellement le long de ladite direction d'expansion 3. Pour cela, comme développée plus loin, ladite nervure 6 présente, par exemple, des ailes 14, orientées orthogonalement audit bord supérieur 7.

Cela étant, notamment afin de limiter les coûts de revient, ledit panneau 1 est prévu, par exemple, monocouche, par exemple en un matériau bas de gamme. Il pourra s'agir, notamment, d'un matériau thermoplastique, comme du polypropylène ou autre, permettant une mise en forme et/ou un traitement de surface tel que, par exemple, un grainage, apte à améliorer son aspect extérieur.

Dans ce même but, ledit panneau 1 pourra éventuellement être peint et/ou revêtu.

Toujours afin d'améliorer l'aspect esthétique dudit panneau 1, ledit contour fermé 5 est défini, notamment, par une zone d'affaiblissement 15, telle qu'une ligne d'affaiblissement, constituée, par exemple, par des prédécoupes et/ou des découpes, réalisées sur une face cachée de ladite trappe 2 de manière à dissimuler ledit contour 5 aux occupants du véhicule.

Ladite ligne d'affaiblissement 15 peut être, éventuellement, discontinue. Dans ce cas, les discontinuïtés sont suffisamment faibles pour permettre, comme évoqué plus haut, une séparation complète de ladite trappe 4, lors de l'expansion du coussin gonflable.

De manière générale, le caractère fermé du contour 5 de cette dernière doit d'ailleurs être examiné après déclenchement dudit dispositif, la trappe 4 conforme à l'invention étant quant à elle totalement détachée dudit panneau 1, contrairement aux trappes présentant un contour ouvert.

Par « face cachée », on entend la face du panneau 1 se trouvant en vis-à-vis du volume 4 caché aux occupants.

Ladite trappe 2 est ainsi invisible et ledit panneau 1 donne aux occupants du véhicule une impression extérieure uniforme, le contour 5 n'étant pas visible.

Lesdites lignes d'affaiblissement 15 sont réalisées, par exemple, par reprise au laser, ou autre. A ce sujet, ladite trappe 4 présente, par exemple, un contour 5 sensiblement rectangulaire.

Par ailleurs, ledit élément conforme à l'invention présente en outre, éventuellement, un puits 16, apte à favoriser le guidage dudit dispositif lors de son expansion derrière ledit panneau 1, une 17 des faces dudit puits 16 définissant ladite nervure d'appui 6.

Ledit puits 16 présente, par exemple, une section légèrement inférieure à la surface de ladite trappe 2, l'axe longitudinal dudit puits 16 étant orienté sensiblement selon ladite direction d'expansion 3.

Selon le mode de réalisation correspondant notamment à celui illustré aux figures 2 et 3, ledit puits 16 est alors constitué, éventuellement, du même matériau que celui dudit élément de liaison 9.

Comme cela a déjà été évoqué pour le mode de mise en oeuvre mentionné au paragraphe précédent mais comme cela est également possible dans les autres modes de mise en oeuvre de l'invention, ledit puits 16 est, par exemple, muni d'ailes 14, régulièrement espacées et disposées orthogonalement à ses faces latérales 17, 18, 19, 20. Les ailes 14 disposées orthogonalement à ladite face latérale 17 définissant la nervure d'appui 6 présentent alors des découpes 21, aptes à définir ledit logement 11.

Selon un premier mode de réalisation, correspondant notamment à ceux illustrés, l'extrémité supérieure dudit puits 16 affleure ledit panneau 1, ledit puits 16 étant maintenu par ailleurs.

Selon un autre mode de réalisation, ledit puits 16 est assujetti audit panneau 1, par exemple au-delà dudit contour 5, c'est-à-dire à l'extérieur de celui-ci de manière à le laisser dégagé.

Par ailleurs, ledit élément de liaison 9 est prévu assujetti sous ladite trappe 2, par exemple, sur la presque totalité de sa surface. On entend par là jusqu'au voisinage dudit contour 5.

La structure de ladite trappe 2 est ainsi renforcée. Plus précisément, on pourra choisir pour constituer ledit élément de liaison 9, par exemple, un matériau apte à remplir les caractéristiques techniques de résistance aux chocs et/ou à la fragmentation nécessaires pour éviter un éclatement en morceaux lors du déclenchement du dispositif expansible, ceci sur un large intervalle de température.

De manière à remplir également son rôle de liaison, il s'agira en outre d'un matériau résistant aux contraintes de traction.

Les caractéristiques techniques spécifiques que doit remplir la partie du panneau 1 destinée à s'ouvrir pour laisser passer ledit dispositif expansible sont donc reportées sur les matériaux constituant ledit élément de liaison 9, permettant en conséquence l'utilisation d'un matériau bas de gamme pour constituer ledit panneau 1.

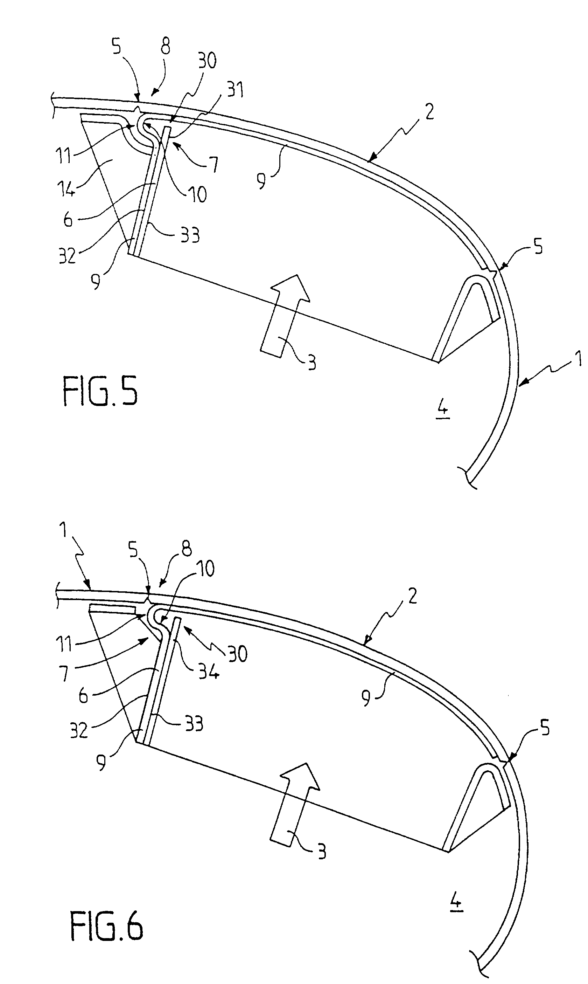

Cela étant, comme représenté aux figures 5 et 6, l'élément d'équipement conforme à l'invention comprend, en outre, éventuellement des moyens 30 de protection dudit supplément de longueur 10 de l'élément de liaison 9.

Iles permettent, notamment, d'éviter la formation d'une hernie dans ledit logement 11 lors du déclenchement dudit dispositif expansible.

Lesdits moyens 30 de protection sont constitués, par exemple, comme représenté à la figure 5, par un prolongement 31 de ladite nervure 6 en direction dudit panneau 1, ledit prolongement 31 étant ou non prévu dans la masse.

Ledit élément de liaison 9 et ladite nervure 6 constituent, par exemple, deux pièces distinctes et ledit élément de liaison 9 est rapporté sur ladite nervure 6, sur la face arrière 32 de celle-ci, notamment entre lesdites ailes 14.

Par « face arrière », on entend la face de ladite nervure 6 opposée à la face avant 33, prévue en vis-à-vis du volume traversé par ledit dispositif expansible lors de son déclenchement.

Selon un autre mode de réalisation, lesdits moyens de protection 30 sont constitués, comme représentée à la figure 6, par une pièce 34 rapportée sur la face avant 33 de ladite nervure 6 et/ou dudit élément de liaison 9, éventuellement prévus confondus.

A titre d'exemple, le matériau utilisé pour constituer ledit élément de liaison 9 est, notamment, celui connu de l'homme de l'art sous le nom de SEBS, c'est-à-dire styrène éthylène butadiène styrène ou, plus précisément, lorsque le panneau 1 est en polypropylène, il pourra s'agir de polypropylène SEBS.

Comme représenté, l'élément d'équipement intérieur pour véhicule conforme à l'invention est prévu, par exemple, au niveau du tableau de bord d'un véhicule, notamment en partie haute, ladite arête supérieure 8 étant placée, par exemple, au voisinage du pare-brise du véhicule.

A titre d'exemple, le panneau 1 est obtenu par injection, aucun orifice n'étant prévu dans celui-ci pour constituer ladite trappe 4. Au contraire, comme évoqué plus haut, celle-ci est définie dans la masse dudit panneau 1, notamment par reprise au laser pour former les lignes d'affaiblissement 15 définissant ledit contour 5.

Quant audit élément de liaison 9, il est obtenu, notamment, par injection puis collage et/ou soudure sur ledit panneau 1. Il pourra encore s'agir, éventuellement, d'un surmoulage et/ou d'une bi-injection.

Selon ce dernier mode de réalisation, on injecte le panneau 1 dans un outillage puis on injecte ledit élément de liaison 9, dans le même outillage, au niveau, par exemple, d'une fenêtre, disposée en vis-à-vis dudit panneau 1 à l'emplacement prévu pour ladite trappe 4.

## Revendications

1. Elément d'équipement intérieur pour véhicule, notamment véhicule automobile, constitué
- d'un panneau (1) comprenant une trappe (2) d'un dispositif expansible, notamment de retenue à sac ou coussin gonflable, présentant une direction d'expansion donnée (3), ladite trappe (2), prévue dans la masse dudit panneau (1), étant délimitée par un contour fermé (5), apte à permettre une ouverture totale de ladite trappe (2) lors du déclenchement dudit dispositif expansible,
- d'au moins une nervure d'appui (6), assujettie en un point fixe dudit véhicule, orientée sensiblement selon ladite direction d'expansion (3) et s'étendant sur la longueur de ladite trappe (2),
- d'au moins un élément de liaison (9), assujetti d'une part à ladite trappe (2), sur la longueur de laquelle il s'étend, sensiblement, et, d'autre part à ladite nervure (6) de manière à retenir ladite trappe (2) lors de son ouverture, ladite trappe (2) et ledit élément de liaison (9) étant constitués de pièces distinctes,
et où ledit panneau (1) est prévu monocouche,
**caractérisé par le fait que** :
- ladite nervure d'appui (6) présente un bord (7), rigide ou rigidifié, prévu au voisinage d'une arête (8), dite supérieure, de ladite trappe (2), ledit bord (7) étant prévu à distance dudit panneau (1).

2. Elément selon la revendication 1 dans lequel ladite nervure d'appui (6) est constituée par une face d'un puits (16), apte à favoriser le guidage dudit dispositif lors de son expansion derrière ledit panneau (1), ledit puits (16) et ledit panneau (1) constituant des pièces distinctes, éventuellement assujeties l'une à l'autre ou maintenues par ailleurs.

3. Elément selon la revendication 2, dans lequel ledit élément de liaison (9) présente un supplément (10) de longueur, déformable librement dans un logement (11) prévu entre ladite nervure (6) et ledit panneau (1).

4. Elément selon la revendication 1, dans lequel ladite nervure (6) est constituée par ledit élément de liaison (9), prévu rigidifié partiellement le long de ladite direction d'expansion (3).

5. Elément selon la revendication 1, dans lequel ledit contour fermé (5) est défini par une zone d'affaiblissement (15) constituée par des prédécoupes et/ou des découpes réalisées sur une face cachée de ladite trappe (2) de manière à dissimuler ledit contour (5) aux occupants du véhicule.

6. Elément selon la revendication 3, dans lequel ledit puits (16) est muni d'ailes (14), régulièrement espacées et disposées orthogonalement à ses faces latérales (17, 18, 19, 20), les ailes (14) disposées orthogonalement à ladite face latérale (17) définissant la nervure d'appui (6) présentant des découpes (21) aptes à définir ledit logement (11).

7. Elément selon la revendication 1, dans lequel ledit élément de liaison (9) est prévu assujetti sous ladite trappe (2) sur la presque totalité de sa surface de manière à renforcer cette dernière.

8. Elément selon la revendication 3, comprenant, en outre, des moyens de protection (30) dudit supplément de longueur (10).

## Patentansprüche

1. Innenausstattungsteil für Fahrzeuge, nämlich Kraftfahrzeuge, bestehend aus
- einer Platte (1), die eine Klappe (2) für eine ausdehnbare Vorrichtung, nämlich zum Halten eines Luftsackes oder Luftkissens, umfaßt, die eine gegebene Ausdehnungsrichtung (3) aufweist, wobei die genannte, in der Masse der genannten Platte (1) vorgesehene Klappe (2) durch einen geschlossenen Kontur (5) begrenzt ist, der geeignet ist, beim Einschalten der genannten ausdehnbaren Vorrichtung eine vollständige Öffnung der genannten Klappe (2) zu erlauben,
- wenigstens eine an einer festen Stelle des genannten Fahrzeugs befestigte Abstützrippe (6), die im wesentlichen gemäß der genannten Ausdehnungsrichtung (3) gerichtet ist und sich über die Länge der gennanten Klappe (2) erstreckt,
- wenigstens ein Verbindungsglied (9), das, einerseits, an der Klappe (2), über deren Länge es sich im wesentlichen erstreckt, und, andererseits, an der genannten Rippe (6) befestigt ist, derart, daß es die genannte Klappe (2) beim Öffnen derselben hält, wobei die genannte Klappe (2) und das genannte Verbindungsglied (9) aus unterschiedlichen Teilen bestehen,
und bei dem die genannte Platte (1) einschichtig vorgesehen ist,
**dadurch gekennzeichnet, daß** :
- die genannte Abstützrippe (6) einen steifen oder versteiften Rand (7) aufweist, der in der Nähe einer Kante (8) der genannten Klappe (2), die als obere Kante bezeichnet wird, vorgesehen ist, wobei der genannte Rand (7) auf einem Abstand von der genannten Platte (1) vorgesehen ist.

2. Teil nach Anspruch 1, bei dem die genannte Abstützrippe (6) aus einer Fläche einer Vertiefung (16) besteht, die geeignet ist, die Führung der genannten Vorrichtung während der Ausdehnung derselben hinter der genannten Platte (1) zu befördern, wobei die genannte Vertiefung (16) und die genannte Platte (1) unterschiedliche Teile bilden, die gegebenenfalls an einander befestigt sind oder irgendwo anders gehalten werden.

3. Teil nach Anspruch 2, bei dem das genannte Verbindungsglied (9) eine zusätzliche Länge (10) aufweist, die in einer zwischen der genannten Rippe (6) und der genannten Platte (1) vorgesehenen Ausnehmung frei verformbar ist.

4. Teil nach Anspruch 1, bei dem die genannte Rippe (6) aus dem genannten Verbindungsglied (9), das in der genannten Ausdehnungsrichtung (3) teilweise versteift ist, besteht.

5. Teil nach Anspruch 1, bei dem der genannte geschlossene Kontur (5) von einem Verschwächungsbereich (15) definiert wird, der aus in einer unsichtbaren Fläche der genannten Klappe (2) vorgesehenen Vorausschnitten und/oder Ausschnitten besteht, derart, daß der genannte Kontur (5) für die Einsassen des Fahrzeugs versteckt bleibt.

6. Teil nach Anspruch 3, bei dem die genannte Vertiefung (16) mit regelmäßig von einander beabstandeten Flügeln (14) versehen ist, die rechtwinklig zu deren Seitenflächen (17, 18, 19, 29) angeordnet sind, wobei die rechtwinklig zur genannten Seitenfläche (17) angeordneten Flügel (14) die Abstützrippe (6) bilden, welche Ausschnitte (21) aufweist, die geeignet sind, die genannte Ausnehmung (11) zu definieren.

7. Teil nach Anspruch 1, bei dem das genannte Verbindungsglied (9) unterhalb der genannten Klappe (2), über fast die ganze Oberfläche dieser letzten befestigt ist, derart, daß diese letzte verstärkt ist.

8. Teil nach Anspruch 3, umfassend außerdem Schutzmittel (30) für die zusätzliche Länge (10).

## Claims

1. An equipment element for vehicle, notably an automotive vehicle, consisting of
- a panel (1) comprising a trap (2) of an expansible device, notably a retaining device with inflatable bag or cushion, having a given expansion direction (3), said trap (2), provided in the thickness of said panel (1), being delineated by a closed contour (5), capable of enabling total opening of said trap (2) when triggering said expansible device,
- at least one back-up rib (6), slaved at a fixed point of said vehicle, oriented substantially along said expansion direction (3) and extending over the length of said trap (2),
- at least a linking member (9), slaved on the one hand to said trap (2), over the length whereof it extends, substantially, and, on the other hand, to said rib (6) in order to retain said trap (2) as its opens, said trap (2) and said linking member (9) being composed of distinct parts,
- and wherein said panel (1) is provided as a single piece,
**characterised in that**:
- said back-up rib (6) has an edge (7), a rigid or rigidified edge, provided in the vicinity of a so-called upper rim (8) of said trap (2), said edge (7) being laid out at a distance from said panel (1).

2. An element according to claim 1 wherein said back-up rib (6) consists of a well (16) on one face, capable of promoting the guiding of said device during expansion behind said panel (1), said well (16) and said panel (1) forming distinct parts, possibly slaved to one another or held besides.

3. An element according to claim 2, wherein said linking member (9) has an extension (10) in length, freely deformable in a housing (11) provided between said rib (6) and said panel (1).

4. An element according to claim 1, wherein said rib (6) consists of said linking member (9), laid out as partially rigidified along said expansion direction (3).

5. An element according to claim 1, wherein said closed contour (5) is delineated by a softening zone (15) composed of pre-cut-outs and/or cut-outs provided in a hidden face of said trap (2) in order to mask said contour (5) to the vehicle's occupiers.

6. An element according to claim 3, wherein said well (16) is fitted with wings (14), regularly spaced and arranged perpendicular to its lateral faces (17, 18, 19, 20) the wings (14) arranged perpendicular to said lateral face (17) delineating the back-up rib (6) showing cut-outs (21) capable of delineating said housing (11).

7. An element according to claim 1, wherein said linking member (9) is slaved under said trap (2) almost over its whole surface area in order to reinforce said trap.

8. An element according to claim 3, comprising, besides, protection means (30) for said length extension (10).
